# EUROPEAN PATENT SPECIFICATION

(11) **EP 3 226 742 B1**
(45) Date of publication and mention of the grant of the patent: **05.09.2018**
(21) Application number: 15817622.2
(22) Date of filing: 25.11.2015
(51) Int. Cl.: A47L 15/42, A47L 15/48

(54) **A HEAT PUMP DISHWASHER**
WÄRMEPUMPENGESCHIRRSPÜLER
LAVE-VAISSELLE COMPRENANT UNE POMPE À CHALEUR

(30) Priority: 03.12.2014 TR 201414626
(43) Date of publication of application: 11.10.2017
(73) Proprietor: Arçelik Anonim Sirketi, 34950 Istanbul (TR)
(72) Inventor: KOC, Yusuf, 34950 Istanbul (TR); ERSOY, Osman Gokhan, 34950 Istanbul (TR); AKKAS, Nevin, 34950 Istanbul (TR); ALPTEKIN, Ahmet, 34950 Istanbul (TR); BIRCI, Emine, 34950 Istanbul (TR); KAYA, Mehmet, 34950 Istanbul (TR); POYRAZ, Onur, 34950 Istanbul (TR)
(86) International application number: PCT/TR2015/050196
(87) International publication number: WO 2016/089332

(56) References cited:
- EP-A2- 2 682 037
- WO-A1-2015/155643
- KR-A- 20150 108 188
- US-A1- 2013 152 967
- US-A1- 2014 238 450

## Description

The present invention relates to a dishwasher comprising a heat pump providing the heating of the water to be used in washing.

In dishwashers, heating the water used for washing and rinsing the dishes to be used by heat pumps with low energy consumption is known. The heat pumps are operated with the principle that the refrigerant is compressed and expanded between at least two heat exchangers, thus providing heat transfer. In addition, heat is drawn from the environment or from an additional heat source such as heat reservoir by the heat exchanger and the heat drawn is transferred to the other heat exchanger, thus increasing the effectiveness of the heat pump. Since the surface of the heat exchanger that draws heat from the environment is cold, the moisture in the ambient air condenses on the heat exchanger. Drip trays wherein the condensate is collected are used under the heat exchanger. If the water collected in the drip tray is not discharged, it causes bad odors and moreover, when the tray is overflown, the overflown water causes electrical failures.

In the state of the art European Patent Application No. EP2682037, a dishwasher is disclosed, wherein the condensate is discharged together with the wash water.

In the state of the art International Patent Application No. WO2005009197, a dishwasher is disclosed, wherein the drying efficiency is improved by using the wash water.

In the state of the art International Patent Application No. WO2012089569, a dishwasher is disclosed, comprising a heat exchanger connected to a cold reservoir, wherein the heat stored in the cold reservoir is used in the drying step. WO2015155643 discloses a dishwasher comprising a heat pump and a drying pocket disposed on a side wall of dishwashers tub. The aim of the present invention is the realization of a dishwasher wherein the water condensing on the heat exchanger is efficiently discharged.

The dishwasher realized in order to attain the aim of the present invention, explicated in the first claims and the respective claims thereof comprises a water duct that extends between the drip tray and the drying pocket disposed on the tub lateral surface; a pump that is disposed on the water duct and that enables the water in the drip tray to be delivered to the drying pocket; a hole that opens into the tub at the base of the drying pocket and a control unit that enables the water in the drip tray to be discharged through the drying pocket by means of the pump. In the dishwasher of the present invention, the water collected in the drip tray is transferred to the drying pocket, that enables the humid air inside the tub to be condensed after the washing process, thus providing the cooling of the drying pocket. Thus, by using the cold water in the drip tray, savings in the energy required for the drying process are provided.

In an embodiment of the present invention, the drying pocket is cooled by circulating the water in the drip tray through a channel, that is disposed at the lateral surface of the drying pocket and that has an inlet providing the intake of the water transferred to the drying pocket and an outlet providing the transfer thereof to the tub through the hole, thus providing the discharge of the water. In this embodiment, the water is passed through a channel instead of the drying pocket wherein the condensation occurs and thus, the water providing the cooling is prevented from leaving its moisture on the surface where the condensation occurs. Consequently, the hot humid air coming from the tub is enabled to be more efficiently condensed on the surfaces of the drying pocket.

In another embodiment of the present invention, the channel is arranged on at least one surface of the tub wherein the washing process is carried out. By disposing the channel on the lateral surface of the tub, the lateral surface of the tub is cooled, thus causing the formation of condensation on the lateral surface of the tub and increasing the drying efficiency.

In another embodiment of the present invention, the channel is bent in serpentine form on the tub surface. By increasing the length of the channel as such, the cold water in the drip tray is discharged after flowing a longer path and by increasing the surface area being cooled, the amount of heat transfer is increased.

In another embodiment of the present invention, the channel surrounds all around the tub. By means of this embodiment, the cold water in the drip tray enables the cooling of almost the entire tub surface. Thus, the humid air in the tub condenses on all the surfaces of the tub.

In another embodiment of the present invention, a first valve at the channel inlet and a second valve at the channel outlet are provided to enable the opening/closing of the channel inlet and outlet and after the water in the drip tray is transferred to the channel, the valves are changed to the closed position, thus enabling the water transferred from the drip tray to be kept waiting in the channel.

In another embodiment of the present invention, the control unit keeps the first valve and the second valve closed in order to increase the amount of the heat transfer of the channel surfaces with the water flowing through the channel, thus by increasing the duration the water performs heat transfer with the channel, the drying pocket is more efficiently cooled.

In another embodiment of the present invention, the water transferred into the channel is circulated through the channel by means of a circulation pump. The control unit changes the first valve and the second valve to the closed position and the circulation pump circulates the water through the channel, thus enabling the channel to be efficiently cooled.

In another embodiment of the present invention, the dishwasher comprises an opening that is arranged on the lateral surface of the tub and that opens into the drying pocket. In the drying step, the humid air inside the tub passes through the opening to enter the drying pocket and condenses on the cold drying pocket surface.

In another embodiment of the present invention, the dishwasher comprises a fan that enables the humid air inside the tub to be directed to the drying pocket, thus providing an active drying process.

By means of the present invention, the heat of the water collected in the drip tray is facilitated for cooling the drying pocket in the drying step before being discharged. The cold surface required for the condensation of the humid air inside the tub in the drying step is obtained by using the water in the drip tray. The water in the drip tray, that must be discharged to prevent the problems of overflowing and bad odors, is discharged after being used for increasing the drying efficiency without consuming additional energy.

The dishwasher realized in order to attain the aim of the present invention is illustrated in the attached figures, where:

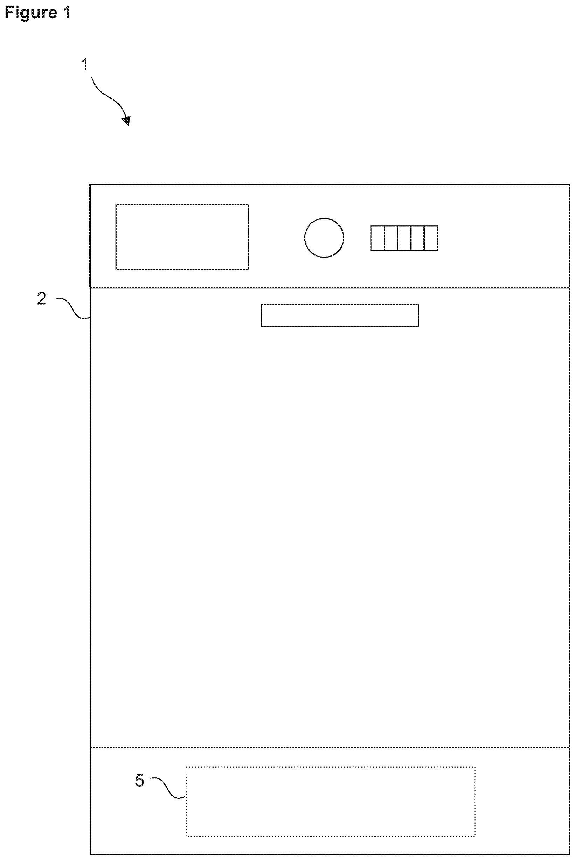

Figure 1 - is the schematic view of a dishwasher.

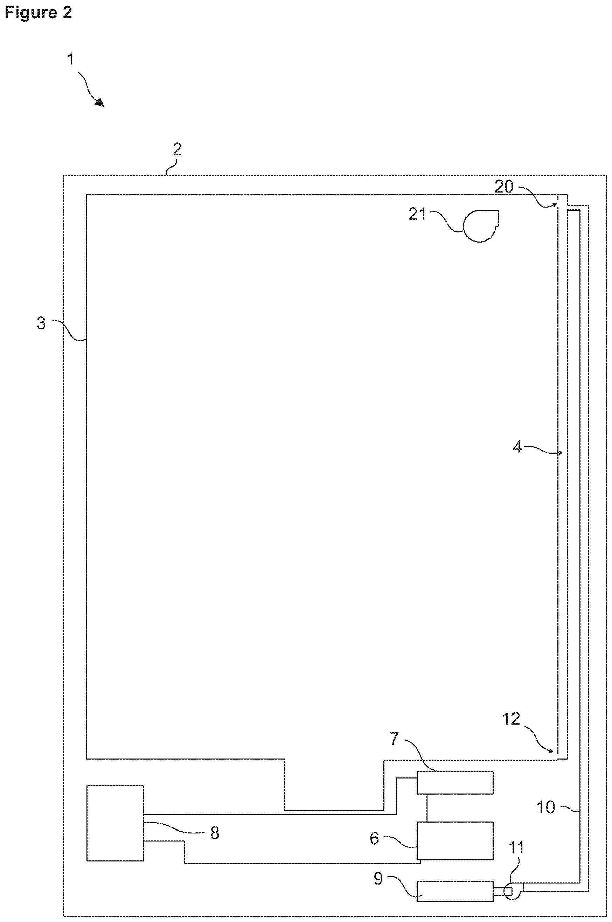

Figure 2 - is the schematic view of the tub and the drying pocket related to an embodiment of the present invention.

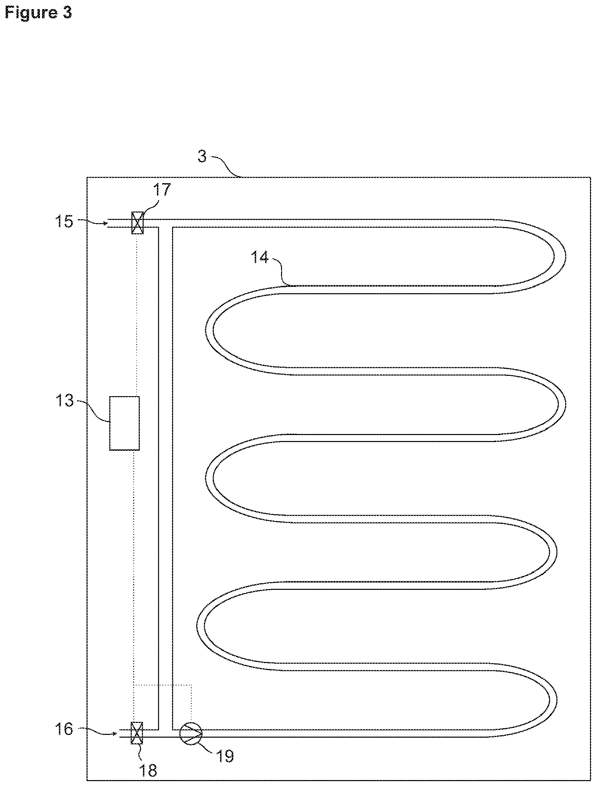

Figure 3 - is the schematic view of the tub lateral surface and the channel related to an embodiment of the present invention.

The elements illustrated in the figures are numbered as follows:
1. Dishwasher
2. Body
3. Tub
4. Drying pocket
5. Heat pump
6. First heat exchanger
7. Second heat exchanger
8. Compressor
9. Drip tray
10. Duct
11. Pump
12. Hole
13. Control unit
14. Channel
15. Inlet
16. Outlet
17. Fist valve
18. Second valve
19. Circulation pump
20. Opening
21. Fan

The dishwasher (1) comprises a body (2); a tub (3) that is disposed inside the body (2) and wherein the steps of washing, rinsing and drying are realized; a drying pocket (4) that is disposed at least one lateral wall of the tub (3), that is in thermal contact with the tub (3) and that provides the condensation of the humid air inside the tub (3) by being cooled in the drying step; a heat pump (5) that is disposed inside the body (2), that provides the heating of the water to be used in the washing step and that has a first heat exchanger (6) drawing heat from the ambient air, a second heat exchanger (7) transferring the heat received from the first heat exchanger (6) to the wash water and a compressor (8) fluidly connected to the first heat exchanger (6) and the second heat exchanger (7), realizing the refrigerant cycle, and a drip tray (9) that is disposed immediately under the first heat exchanger (6), wherein the water condensing on the first heat exchanger (6) is collected.

In the dishwasher (1), the articles to be washed are placed into the tub (3) and washed to be cleaned in the tub (3). After the washing step, the drying pocket (4) is cooled, thus providing the condensation of the humid air inside the tub (3). Moreover, in the dishwasher (1), the refrigerant at low temperature is passed over the first heat exchanger (6) and heat is transferred from the environment to the first heat exchanger (6) the surface of which is cooled down. The first heat exchanger (6) transfers the heat received from the environment to the refrigerant. The heat drawn from the environment by the first heat exchanger (6) is transferred to the second heat exchanger (7). The second heat exchanger (7) transfer the heat drawn thereby to the wash water, thus enabling the heating of the wash water and this process is carried out by passing the water to be used in the washing step to be passed over the second heat exchanger (7) the surface of which heats up. At the same time, the ambient air condenses and leaves its moisture on the first heat exchanger (6) the surface of which is cool. The condensing water flows down to be collected in the drip tray (9) disposed immediately under the first heat exchanger (6).

The dishwasher (1) of the present invention comprises a water duct (10) that extends between the drying pocket (4) and the drip tray (9) and that is connected to the upper surface of the drying pocket (4), a pump (11) that is disposed on the water duct (10) and that enables the water in the drip tray (9) to be delivered to the drying pocket (4), a hole (12) that is arranged on the drying pocket (4) and that opens into the tub (3) and a control unit (13) that enables the water collected in the drip tray (9) to be delivered to the drying pocket (4), further providing the discharge of the water in the drying pocket (4) into the tub (3) by means of the hole (12) by controlling the pump (11). Since the surface of the first heat exchanger (6) is cold during the heating of the wash water, the water collected in the drip tray (9) is also cold with respect to the environment. By controlling the pump (11), the control unit (13) enables the water, that must be discharged in order to prevent overflowing or formation of bad odors, to be delivered to the drying pocket (4) and the water flows over the drying pocket (4) and preferably passes through the hole (12) arranged at the base of the drying pocket (4) to be discharged to the tub (3). At this time, the water that is cooler than the environment draws heat from the drying pocket (4), thus enabling the cooling of the drying pocket (4). As the drying pocket (4) becomes cooler, the condensation efficiency of the humid air inside the tub (3) is improved. Thus, both the drip tray (9) is discharged and the efficiency of the drying step is increased.

In an embodiment of the present invention, the dishwasher (1) comprises a channel (14) wherein the water transferred from the pump (11) is passed so as to cool the drying pocket (4), the channel (14) being disposed on the drying pocket (4) and having an inlet (15) enabling the water delivered to the drying pocket (4) to enter therein and an outlet (16) fluidly connected to the hole (12). The water transferred from the drip tray (9) is delivered to the channel (14) preferably positioned on the lateral surface of the drying pocket (4), thus the surfaces of the drying pocket (4) are cooled. By passing the water through the channel (14), the surface of the drying pocket (4) is cooled with the surface thereof not getting wet but remaining dry, thereby the time required for the drying pocket (4) surfaces to reach saturation is increased, improving the condensation efficiency.

In another embodiment of the present invention, the channel (14) is disposed on at least one surface of the tub (3) and the water delivered by the pump (11) is passed through the channel (14). By disposing the channel (14) on the lateral surface of the tub (3), the lateral surface of the tub (3) is cooled and the humid air, that cannot be transferred to the drying pocket (4) but remains in the tub (3), is enabled to condense inside the tub (3), on the lateral surface of the tub (3).

In another embodiment of the present invention, the channel (14) is bent in serpentine form so as to cover at least one surface of the tub (3). By means of this embodiment, the area covered by the channel (14) on the tub (3) is increased and the water delivered by the pump (11) is enabled to cool a larger area. Thus, the humid air inside the tub (3) is enabled to be more efficiently condensed in the drying step.

In another embodiment of the present invention, the channel (14) surrounds the lateral surfaces of the tub (3) all around. By means of this embodiment, in the drying step, by increasing the surface area on the tub (3) whereon the heat transfer is carried out, the condensation area is prevented from being saturated and decreasing the drying efficiency.

In another embodiment of the present invention, the dishwasher (1) comprises a first valve (17) that is connected to the inlet (15) and a second valve (18) that is connected to the outlet (16) and both controls the flow of the water in the channel (14). When the first valve (17) and the second valve (18) are open, the water delivered into the channel (14) flows along the channel (14) to be discharged. When the second valve (18) is closed, the water delivered into the channel (14) is kept waiting in the channel before being discharged.

In an embodiment of the present invention, the control unit (13) keeps the first valve (17) and the second valve (18) closed, thus enables the water to be kept in the channel (14). After the pump (11) delivers the water in the drip tray (9) to the channel (14), the control unit (13) changes the first valve (17) and the second valve (18) to the closed position so that the water is kept waiting in the channel (14), thus by increasing the heat exchange duration of the water and the channel (14) surfaces, the channel (14) is enabled to be cooled in a more efficient manner.

In an embodiment of the present invention, the dishwasher (1) comprises a circulation pump (19) that is disposed on the channel (14), that is fluidly connected to the channel (14) and that enables the water in the channel (14) to be circulated in the channel (14). The control unit (13) changes the first valve (17) and the second valve (18) to the closed position and the circulation pump (19) enables the water to be circulated in the channel (14). By means of this embodiment, even if a small amount of water is collected in the drip tray (9), the water collected is circulated in the channel (14), thus providing the cooling of all the surfaces of the channel (14).

In another embodiment of the present invention, the dishwasher (1) comprises an opening (20) that is arranged on the lateral surface of the tub (3) and that opens into the drying pocket (4). The humid air inside the tub (3) enters the drying pocket (4) through the opening (20) and condenses on the drying pocket (4) cooled by the water in the drip tray (9).

In another embodiment of the present invention, the dishwasher (1) comprises a fan (21) that directs the humid air inside the tub (3) towards the drying pocket (4) so as to pass through the opening (20). By directing the humid air inside the tub (3) to the drying pocket (4), an active drying process is carried out.

In the dishwasher (1) of the present invention, the water collected in the drip tray (9) is facilitated for cooling the drying pocket (4) so as to increase the drying efficiency before being discharged.

## Claims

1. A dishwasher (1) **comprising** a body (2); a tub (3) that is disposed inside the body (2) and wherein the steps of washing, rinsing and drying are realized; a drying pocket (4) that is disposed at least at one lateral wall of the tub (3), that is in thermal contact with the tub (3) and that provides the condensation of the humid air inside the tub (3) by being cooled in the drying step; a heat pump (5) that is disposed inside the body (2), that provides the heating of the water to be used in the washing step and that has a first heat exchanger (6) drawing heat from the ambient air, a second heat exchanger (7) transferring the heat received from the first heat exchanger (6) to the wash water and a compressor (8) fluidly connected to the first heat exchanger (6) and the second heat exchanger (7), realizing the refrigerant cycle, and a drip tray (9) that is disposed immediately under the first heat exchanger (6), wherein the water condensing on the first heat exchanger (6) is collected, **characterized by** a water duct (10) that extends between the drying pocket (4) and the drip tray (9), a pump (11) that is disposed on the water duct (10) and that enables the water in the drip tray (9) to be delivered to the drying pocket (4), a hole (12) that is arranged on the drying pocket (4) and that opens into the tub (3) and a control unit (13) that enables the water collected in the drip tray (9) to be delivered to the drying pocket (4), further providing the discharge of the water in the drying pocket (4) into the tub (3) by means of the hole (12) by controlling the pump (11).

2. A dishwasher (1) as in Claim 1, **characterized by** a channel (14) wherein the water transferred from the pump (11) is passed so as to cool the drying pocket (4), the channel (14) being disposed on the drying pocket (4) and having an inlet (15) enabling the water delivered to the drying pocket (4) to enter therein and an outlet (16) fluidly connected to the hole (12).

3. A dishwasher (1) as in Claim 2, **characterized by** the channel (14) that is disposed on at least one surface of the tub (3).

4. A dishwasher (1) as in Claim 3, **characterized by** the channel (14) that is bent in serpentine form so as to cover at least one surface of the tub (3).

5. A dishwasher (1) as in any one of the Claims 3 or 4, **characterized by** the channel (14) that surrounds the lateral surfaces of the tub (3) all around.

6. A dishwasher (1) as in any one of the claims 2 to 5, **characterized by** a first valve (17) that is connected to the inlet (15) and a second valve (18) that is connected to the outlet (16) and both control the flow of the water in the channel (14).

7. A dishwasher (1) as in Claim 6, **characterized by** the control unit (13) that keeps the first valve (17) and the second valve (18) closed, thus enables the water to be kept in the channel (14).

8. A dishwasher (7) as in Claim 1, **characterized by** a circulation pump (19) that is disposed on the channel (14) and that enables the water in the channel (14) to be circulated in the channel (14).

9. A dishwasher (1) as in any one of the above claims, **characterized by** an opening (20) that is arranged on the lateral surface of the tub (3) and that opens into the drying pocket (4).

10. A dishwasher (1) as in Claim 9, **characterized by** a fan (21) that directs the humid air inside the tub (3) towards the drying pocket (4) so as to pass through the opening (20).

## Patentansprüche

1. Geschirrspüler (1) umfassend einen Körper (2); eine Wanne (3), die innerhalb des Körpers (2) angeordnet ist und wobei die Schritte des Waschens, Spülens und Trocknens realisiert werden; Trocknungsbehälter (4), der zumindest auf einer lateralen Wand der Wanne (3) angeordnet ist, die in thermischen Kontakt mit der Wanne (3) steht und die Kondensation der feuchten Luft innerhalb der Wanne (3) vorsieht, indem sie im Trocknungsschritt gekühlt ist; eine Wärmepumpe (5), die innerhalb des Körpers (2) angeordnet ist, die das Erwärmen des im Waschschritt zu verwendenden Wassers bereitstellt und die einen ersten Wärmetauscher (6) aufweist, der die Wärme von der Umgebungsluft zieht, einen zweiten Wärmetauscher (7), der die von dem ersten Wärmetauscher (6) empfangene Wärme auf das Waschwasser überträgt und einen Kompressor (8) aufweist, der fluidisch mit dem ersten Wärmetauscher (6) und mit dem zweiten Wärmetauscher (7) verbunden ist, Kältemittelzirkulation realisiert, und eine Tropfschale (9), die unmittelbar unter dem ersten Wärmetauscher (6) angeordnet ist, wobei das an dem ersten Wärmetauscher (6) kondensierende Wasser gesammelt wird, **gekennzeichnet durch** einen Wasserkanal (10), der sich zwischen dem Trocknungsbehälter (4) und der Tropfschale (9) befindet, eine Pumpe (11), die auf dem Wasserkanal (10) angeordnet ist und die es ermöglicht, dass das Wasser in der Tropfschale (9) in den Trocknungsbehälter (4) geleitet wird, ein Loch (12), das auf dem Trocknungsbehälter (4) angeordnet ist und das in die Wanne (3) mündet und eine Steuereinheit (13), die es ermöglicht, dass das in der Tropfschale (9) gesammelte Wasser an die Trocknungsbehälter (4) abgegeben wird, ferner den Abfluss des Wassers im Trocknungsbehälter (4) in die Wanne (3) mittels des Lochs (12) durch die Steuerung der Pumpe (11) vorsieht.

2. Geschirrspüler (1) nach Anspruch 1, **gekennzeichnet durch** einen Kanal (14), wobei das von der Pumpe (11) übertragene Wasser durchgeleitet wird, um den Trocknungsbehälter (4) zu kühlen, der Kanal (14) auf dem Trocknungsbehälter (4) angeordnet ist und einen Einlass (15) aufweist, der das vom Trocknungsbehälter (4) übertragene Wasser darin lässt und einen Auslass (16), der fluidisch mit dem Loch (12) verbunden ist.

3. Geschirrspüler (1) nach Anspruch 2 **gekennzeichnet durch** den Kanal (14), der zumindest auf einer Fläche der Wanne (3) angeordnet ist.

4. Geschirrspüler (1) nach Anspruch 3 **gekennzeichnet durch** den Kanal (14), der in Serpentinenform gebogen ist, um mindestens eine Oberfläche der Wanne (3) abzudecken.

5. Geschirrspüler (1) nach Anspruch 3 oder 4 **gekennzeichnetdurch** den Kanal (14), der die Seitenflächen der Wanne (3) rundum umgibt.

6. Geschirrspüler (1) nach einem der Ansprüche 2 bis 5 **gekennzeichnetdurch** ein erstes Ventil (17), das mit dem Einlass (15) verbunden ist, und ein zweites Ventil (18), das mit dem Auslass (16) verbunden ist und dass beide die Strömung des Wassers in dem Kanal (14) steuern.

7. Geschirrspüler (1) nach Anspruch 6 **gekennzeichnetdurch** eine Steuereinheit (13), die das erste Ventil (17) und das zweite Ventil (18) geschlossen hält, sodass das Wasser in dem Kanal (14) gehalten werden kann.

8. Geschirrspüler (7) nach Anspruch 1 **gekennzeichnetdurch** eine Zirkulationspumpe (19), die auf dem Kanal (14) angeordnet ist und die es ermöglicht, dass das Wasser im Kanal (14) innerhalb des Kanals (14) zirkuliert.

9. Geschirrspüler (1) nach einem der vorangehenden Ansprüche **gekennzeichnetdurch** eine Öffnung (20), die auf der lateralen Fläche der Wanne (3) angeordnet ist und die in den Trocknungsbehälter (4) mündet.

10. Geschirrspüler (1) nach Anspruch 9 **gekennzeichnetdurch** einen Lüfter (21), die feuchte Luft innerhalb der Wanne (3) in Richtung der Trocknungsbehälter (4) leitet, um durch die Öffnung (20) zu gelangen.

## Revendications

1. Lave-vaisselle (1) **comprenant** un corps (2); une cuve (3) qui est disposée à l'intérieur du corps (2) et dans laquelle les étapes de lavage, de rinçage et de séchage sont réalisées; une poche de séchage (4) qui est disposée au moins sur une paroi latérale de la cuve (3), qui est en contact thermique avec la cuve (3) et qui assure la condensation de l'air humide à l'intérieur de la cuve (3) en étant refroidie dans l'étape de séchage; une pompe à chaleur (5) disposée à l'intérieur du corps (2), qui fournit le chauffage de l'eau à utiliser dans l'étape de lavage et qui comporte un premier échangeur de chaleur (6) qui tire la chaleur de l'air ambiant, un deuxième échangeur de chaleur (7) transférant la chaleur reçue du premier échangeur de chaleur (6) à l'eau de lavage et un compresseur (8) relié de manière fluidique au premier échangeur de chaleur (6) et au second échangeur de chaleur (7), réaliser le cycle de réfrigérant, et un plateau d'égouttage (9) qui est disposé immédiatement sous le premier échangeur de chaleur (6), dans lequel l'eau condensant sur le premier échangeur de chaleur (6) est recueillie, **caractérisé par** un conduit d'eau (10) qui s'étend entre la poche de séchage (4) et du plateau d'égouttage (9), une pompe (11) disposée sur le conduit d'eau (10) et qui permet à l'eau dans le plateau d'égouttage (9) à délivrer à la poche de séchage (4), un trou (12) qui est disposé sur la poche de séchage (4) et qui débouche dans la cuve (3) et une unité de commande (13) qui permet à l'eau recueillie dans le plateau d'égouttage (9) d'être acheminée vers la poche de séchage (4), assurant en outre l'évacuation de l'eau dans la poche de séchage (4) dans la cuve (3) au moyen du trou (12) en commandant la pompe (11).

2. Lave-vaisselle (1) selon la revendication 1, **caractérisé par** un canal (14) dans lequel l'eau transférée depuis la pompe (11) est passée de manière à refroidir la poche de séchage (4), le canal (14) étant disposé sur la poche de séchage (4) et ayant une entrée (15) permettant à l'eau délivrée à la poche de séchage (4) d'y pénétrer et une sortie (16) reliée fluidiquement au trou (12).

3. Lave-vaisselle (1) selon la revendication 2, **caractérisé par** le canal (14) qui est disposé sur au moins une surface de la cuve (3).

4. Lave-vaisselle (1) selon la revendication 3, **caractérisé par** le canal (14) est plié en serpentin de manière à couvrir au moins une surface de la cuve (3).

5. Lave-vaisselle (1) selon l'une quelconque des revendications 3 ou 4, **caractérisé par** le canal (14) qui entoure les surfaces latérales de la cuve (3) tout autour.

6. Lave-vaisselle (1) selon l'une quelconque des revendications 2 à 5, **caractérisé par** une première soupape (17) qui est reliée à l'entrée (15) et une deuxième soupape (18) qui est reliée à la sortie (16) et tous deux contrôlent l'écoulement de l'eau dans le canal (14).

7. Lave-vaisselle (1) selon la revendication 6, **caractérisé par** l'unité de commande (13) qui maintient la première soupape (17) et la deuxième soupape (18) fermée permet de maintenir l'eau dans le canal (14).

8. Lave-vaisselle (7) selon la revendication 1, **caractérisé par** une pompe de circulation (19) qui est disposée sur le canal (14) et qui permet à l'eau dans le canal (14) de faire circuler dans le canal (14).

9. Lave-vaisselle (1) selon l'une quelconque des revendications précédentes, **caractérisé par** une ouverture (20) qui est agencée sur la surface latérale de la cuve (3) et qui débouche dans la poche de séchage (4).

10. Lave-vaisselle (1) selon la revendication 9, **caractérisé par** un ventilateur (21) qui dirige l'air humide à l'intérieur de la cuve (3) vers la poche de séchage (4) de manière à passer à travers l'ouverture (20).
